# EUROPÄISCHE PATENTSCHRIFT

(11) **EP 0 619 683 B1**
(45) Veröffentlichungstag und Bekanntmachung des Hinweises auf die Patenterteilung: **05.12.2001**
(21) Anmeldenummer: 94101656.0
(22) Anmeldetag: 03.02.1994
(51) Int. Cl.: H04Q 3/545

(54) **Programmgesteuerte Kommunikationsanlage**
Program controlled communication installation
Installation de communication à commande programmée

(30) Priorität: 26.02.1993 DE 4306018
(43) Veröffentlichungstag der Anmeldung: 12.10.1994
(73) Patentinhaber: SIEMENS AKTIENGESELLSCHAFT, 80333 München (DE)
(72) Erfinder: Leimkötter, Ulrich, Dipl.-Ing., D-45888 Gelsenkrichen (DE); Lindemann, Werner, Dr.-Ing., D-45473 Mülheim (DE)

(56) Entgegenhaltungen:
- EP-A- 0 472 775
- EP-A- 0 547 413
- DE-A- 3 827 493
- IEICE TRANSACTIONS ON COMMUNICATIONS, Bd. E75B, Nr. 12, Oktober 1992, TOKYO (JP), Seiten 1277-1286, XP000342559 S, SUMITA: "Modeling and Performance Analysis of SPC Switching Systems"
- PROCEEDINGS OD THE 28TH IEEE CONFERENCE ON DECISION AND CONTROL, Bd. 1, 13. - 15.Dezember 1989, TAMPA (US), Seiten 588-589, XP000091445 P. DE WAAL: "An Approximation Method for a Processor Sharing Queue with Controlled Arrivals and a Waitbuffer"

## Beschreibung

Programmgesteuerte Kommunikationsanlagen dienen zur Verbindung von Endgeräten untereinander und zur Verbindung dieser Endgeräte mit Kommunikationsnetzen, insbesondere öffentlichen Netzen.

An eine Kommunikationsanlage sind je nach Komplexitätsgrad Endgeräte mit vielfältigen Leistungsmerkmalen anschließbar, wie z.B. Analog- und Digitaltelefone, Fernkopierer, Teletext- und Bildschirmtextstationen, Personal Computer, etc.

Unabhängig vom Komplexitätsgrad besteht eine Kommunikationsanlage aus einer Vielzahl von Funktionseinheiten, insbesondere vermittlungstechnischen Funktionseinheiten und einem programmierbaren digitalen Verarbeitungssystem, das diese Funktionseinheiten steuert und überwacht.

Dazu ist es unumgänglich, daß das Verarbeitungssystem ständig mit Informationen über den Betriebszustand der Funktionseinheiten und über jegliche Zustandsänderungen, insbesondere Eingaben an den Endgeräten, informiert wird, um bei Bedarf umgehend entsprechende Steueranweisungen zu erstellen und Informationen ausgeben zu können.

Im Regelfall treffen am Verarbeitungssystem innerhalb kurzer Zeit eine Vielzahl von Informationen ein, die aufgrund der begrenzten Leistungsfähigkeit des Verarbeitungssystems nicht sofort bei ihrem Eintreffen bearbeitet werden können. Die eingetroffenen Informationen, wegen ihrer das Verarbeitungssystem anregenden Wirkung auch Anreize genannt, werden zwischengespeichert, bis sie das Verarbeitungssystem bearbeitet. Da die bearbeitenden Anreize unterschiedlich dringlich sind, wird für die Festlegung der Reihenfolge der Bearbeitung die Wertigkeit der eingetroffenen Anreize herangezogen. Dazu wird im Verarbeitungssystem von vornherein jedem eintreffenden Anreiz eine Wertigkeit in Form eines Prioritätswertes zugeordnet. Von den zwischengespeicherten Anreizen wird dann stets der jeweils höchstpriore Anreiz, der anhand der zugeordneten Prioritätswerte ermittelt wird, entnommen.

Da die von einem jeweiligen Endgerät zur Kommunikationsanlage übermittelbaren Anreize unterschiedliche Prioritätswerte aufweisen, kann es vorkommen, daß ein Benutzer an seinem Endgerät wiederholt Eingaben macht, die das betreffende Endgerät über eine längere Zeitdauer hinweg zur aufeinander folgenden Abgabe von Anreizen mit hoher Priorität veranlassen. Um zu vermeiden, daß in einem solchen Fall der Benutzer eines anderen Endgerätes, das zur Abgabe eines einzigen Anreizes mit niedriger Priorität veranlaßt wurde, über eine - unzumutbar - lange Zeitdauer keine Reaktion auf seine Eingabe erhält, ist, wie aus der europäischen Patentanmeldung EP-A-0 472 775 bekannt, eine Trennung zwischen Anreiz der Fassung und Anreizverarbeitung erforderlich.

Ein hochpriores Anreizsicherungsprogrammodul vermerkt ankommende Anreize in, den Endgeräten individuell zugeordneten, Anreizspeichern. Ein niederpriores Arbitrierungsprogrammodul wählt jeweils einen der Anreizspeicher aus und veranlaßt bei Auffinden eines Anreizes die Bearbeitung des von diesem Anreiz bezeichneten Programmoduls. Nach gänzlicher Abarbeitung des jeweiligen Programmoduls wird der nächste Anreizspeicher ausgewählt.

In dem Bestreben, den Zugang zur Leistungsfähigkeit einer Kommunikationsanlage für die Benutzer zu verbessern, werden hochkomfortable Endgeräte entwickelt, von denen aus eine Vielzahl von Funktionen bzw. Leistungsmerkmalen aktivierbar sind. Um den Fluß von Signalisierungsinformationen zu verbessern, wird bei gewissen Endgeräten die Verbindung zwischen Kommunikationsanlage und Endgeräten durch eine c/d-Aderverbindung ergänzt, die ausschließlich für die Übermittlung von Signalisierungsinformationen dient. Die a/b-Aderverbindung für die Nutzsignalübertragung wird dadurch von überlagerten Signalisierungsinformationen entlastet. Es ist auch vorgesehen, Wahlinformationen über die c/d-Aderverbindung von der Kommunikationsanlage aus abzufragen.

Aufgabe der vorliegenden Erfindung ist es, eine programmgesteuerte Kommunikationsanlage anzugeben, an die sowohl Endgeräte, die von sich aus Anreize übermitteln, als auch Endgeräte, deren Signalisierungsinformationen abgefragt werden müssen, anschließbar sind, wobei bei der Verarbeitung der Signalisierungsinformationen Gleichberechtigung unter den Endgeräten erzielt und der von der Verarbeitungseinrichtung für die Signalisierungsbearbeitung zu erbringende Zeitaufwand verringert werden soll.

Gelöst wird diese Aufgabe erfindungsgemäß durch die Merkmale des Patentanspruchs 1.

Zum schnelleren Verständnis der Zusammenhänge zwischen den im Patentanspruch 1 angegebenen Merkmalen, erscheint es erforderlich, zunächst noch einmal auf allgemeine Prinzipien näher einzugehen.

Um den speziellen Steuerungsaufgaben einer Kommunikationsanlage gerecht zu werden, ist das digitale Verarbeitungssystem mit einem Multitasking- Betriebssystem versehen, das die, für eine Kommunikationsanlage typische Vielzahl von quasi gleichzeitig anfallenden und zu erledigenden Einzelaufgaben koordiniert. Da bei einer Kommunikationsanlage häufig hohe Reaktionsgeschwindigkeiten erforderlich sind, ist als Betriebssystem ein sog. Echtzeitbetriebssystem vorgesehen. Die wesentliche Aufgabe dieses Betriebssystems besteht darin, in Abhängigkeit von eingetroffenen abgefragten oder im Verarbeitungssystem intern gebildeten Anreizen bzw. Meldungen, dem Systemprozessor, der die eigentliche ausführende Einheit des digitalen Verarbeitungssystems ist, entsprechende, für eine Reaktion auf die Anreize bzw. Meldungen vorgesehene Verarbeitungsvorschriften, zuzuweisen.

Solche Anreize, die z.B. jeweils die Form eines '8-bit-Wortes' haben, werden von ersten Endgeräten abgegeben, wenn eine Bedienerperson eine Funktion (z. B. die Uhrzeitanzeige) durch Betätigen einer Taste auslöst. Bei jeder ausgelösten Funktion gibt das Endgerät zu einem vom Endgerät selbst bestimmten Zeitpunkt einen Anreiz an die Kommunikationsanlage ab, wobei den Funktionen unterschiedliche Anreize in Form verschiedener Binärkombinationen der '8-bit-Worte' zugeordnet sind. Im Regelfall werden bei ersten Endgeräten diese Anreize über die a/b-Aderverbindung übermittelt. Eine andere Verfahrensweise bei der Übermittlung von Signalisierungsinformationen ist bei zweiten Endgeräten vorgesehen. Bei diesen Endgeräten wird bei Auslösen einer Funktion eine Meldung gebildet, die im Unterschied zu einem Anreiz eine Länge von einem oder mehr acht-bit-Worten aufweist. Diese Meldungen werden im Endgerät so lange gespeichert, bis sie auf Abruf durch die Kommunikationsanlage an diese übermittelt werden können.

Jeder Anreiz bzw. jede Meldung wird in der Kommunikationsanlage als Erfordernis angesehen, eine vom Anreiz bzw. der Meldung bezeichnete Verarbeitungsvorschrift auszuwählen. Im digitalen Verarbeitungssystem stehen dafür eine Vielzahl von Verarbeitungsvorschriften zur Verfügung, die als jeweilige Programmodule im Systemspeicher hinterlegt sind. Da jedes Programmodul gewissermaßen zur Realisierung einer bestimmten Aufgabe dient, wird es bei Abarbeitung durch den Systemprozessor als "task" bezeichnet. Aufgrund der Tatsache, daß die Abarbeitung von Programmodulen im wesentlichen durch Anreize (bzw. Meldungen) angeregt werden muß, wird dem Betriebssystem ein ereignisgesteuertes Verhalten zugesprochen. Neben den bereits erwähnten, von den angeschlossenen Endgeräten übermittelten Anreizen und Meldungen, werden auch in den verschiedenen vermittlungstechnischen Einheiten, wie z. B. in den Leitungseinheiten, im Koppelnetz etc., also innerhalb der Kommunikationsanlage, Anreize erzeugt. Außerdem kann jede "task" von sich aus Anreize, sog. interne Anreize abgeben, mit denen wiederum die Abarbeitung eines anderen Programmodules veranlaßt werden kann.

Bei den von außerhalb des digitalen Verarbeitungssystems eingetroffenen Anreizen sind zwei Arten zu unterscheiden. Zum Einen die direkten Anreize, die von sich aus das Betriebssystem zur Kenntnisnahme zwingen, und zum anderen die indirekten Anreize, die in einen Meldespeicher gelangen, der vom digitalen Verarbeitungssystem in gewissen Intervallen, z. B. alle 66 ms, ausgelesen wird.

Die von Anreizen und Meldungen bezeichneten Programmodule können grundsätzlich hinsichtlich ihrer Bedeutung in drei verschiedene Kategorien eingeteilt werden. Zur ersten Kategorie gehören diejenigen Programmodule, für deren Bearbeitung eng bemessene zeitliche Vorgaben bestehen, die in jedem Falle erfüllt werden müssen. Zur zweiten Kategorie zählen diejenigen Programmodule, deren Bearbeitung zeitverteilbar ist, weil ein etwas größerer zeitlicher Spielraum zur Verfügung steht. Zu dieser zweiten Kategorie zählen im wesentlichen die bei der Signalisierung zwischen den Endgeräten von den Anreizen und Meldungen bezeichneten Programmodule.

Die dritte Kategorie bilden die zeitunkritischen Programmodule, deren Bearbeitung zwar notwendig ist, aber keinen Zeitvorgaben unterliegt.

Zur Bewältigung der an das Betriebssystem gestellten Koordinations- und Verwaltungsausgaben sind im Betriebssystem mehrere Subsysteme vorgesehen. Ein Kommunikationssubsystem vermerkt jedes, von einem intern oder eingetroffenen Anreiz bzw. abgefragten Meldung bezeichnete Programmodul der ersten und dritten Kategorie in einer Prozeßliste, die eine Art Warteliste für die ablaufbereiten Programmodule darstellt.

Ein Zuteilungssubsystem ermittelt aus den in der Prozeßliste vermerkten Programmodulen jeweils dasjenige mit der höchsten Priorität und weist dies dann dem Systemprozessor zur Ausführung zu.

Ein dem Systemprozessor zugewiesenes Programmodul bleibt so lange zugewiesen, bis es entweder gänzlich abgearbeitet ist oder bis das Zuteilungssubsystem in der Prozeßliste ein, gegenüber dem momontan abgearbeiteten Programmodul höherpriores Programmodul ermittelt. Im letzteren Fall wird die Abarbeitung des momentan "laufenden" Programmoduls vorübergehend unterbrochen, wobei das Programmodul in der Prozeßliste als ablaufbereit vermerkt bleibt. Das Zuteilungssubsystem weist dann das neu ermittelte Programmodul dem Systemprozessor zur Ausführung zu.

Auf der Grundlage der vorstehend erläuterten Zusammenhänge wird nun im folgenden auf die im Patentanspruch 1 angegebenen Merkmale näher eingegangen.

Für die Signalisierungsabwicklung der zweiten Endgeräte sieht die erfindungsgemäß ausgebildete Kommunikationsanlage einen Endgerätesignalisierungsarbiter vor, der als Schaltungsanordnung ausgebildet sein kann. Dieser Endgerätesignalisierungsarbiter, im folgenden zur Vereinfachung nur Arbiter genannt, läßt sich funktional in eine Abfrageeinrichtung und einen Schiebespeicher unterteilen. Die Abfrageeinrichtung dient dazu, die zweiten Endgeräte zyklusweise hinsichtlich zu übermittelnder Meldungen abzufragen. In jedem Zyklus werden nacheinander in einer festen Reihenfolge alle zweiten Endgeräte angesprochen. Wenn ein Endgerät, das eine Meldung bereit hält, erkannt wird, wird diese Meldung, die, wie bereits erwähnt, aus mehreren '8-bit-Worten' bestehen kann, in den Schiebespeicher, der auch als "FIFO-Speicher" bezeichnet werden kann, eingespeichert. Für den Fall, daß die Speicherkapazität des Schiebespeichers nicht ausreicht, um die gesamte Meldung einzuspeichern, wartet die Abfrageeinrichtung, bis der Schiebespeicher durch Auslesen einer oder mehrerer Meldungen wieder eine ausreichende Anzahl von freien Speicherplätzen aufweist und speichert dann eine (einzige) Meldung des abgefragten Endgerätes in den Schiebespeicher ein.

Zyklusbeginn bzw. Zyklusende, d. h. die erste und die letzte Meldung in einem Abfragezyklus, werden von der Abfrageeinrichtung im Schiebespeicher markiert.

Parallel dazu wird beim Eintreffen von Anreizen erster Endgeräte vom Kommunikationssubsystem ein Anreizsicherungsprogrammodul in der Prozeßliste als ablaufbereit vermerkt. Das Anreizsicherungsprogrammodul kann auch aufgrund eines periodisch eintreffenden Echtzeitanreizes ablaufbereit werden. Aufgrund seines zugeordneten Prioritätswertes gehört das Anreizsicherungsprogrammodul im Regelfall der ersten Kategorie an.

Zum einen hat das Anreizsicherungsprogrammodul die Aufgabe, die von den eingetroffenen Anreizen bezeichneten Programmodule je nach Herkunft der Anreize in, den sendenden Endgeräten individuell zugeordneten Anreizspeichern zu vermerken. Diese Anreizspeicher stellen individuelle Wartelisten dar, die üblicherweise nach dem "FIFO-Prinzip " organisiert sind.

Das Anreizsicherungsprogrammodul hat zum anderen auch noch die Aufgabe Informationen, die an die ersten Endgeräte gerichtet sind, weiterzuleiten. Bei Bearbeitung eines Programmoduls können nämlich von diesem Informationen gebildet werden, die an ein oder mehrere Endgeräte gesendet werden sollen. Bei Bearbeitung des Anreizsicherungsprogrammodules werden aus den Endgeräten individuell zugeordneten Informationsausgabespeichern die dort hinterlegten Informationen entnommen und an die betreffenden Endgeräte weitergeleitet.

Selbstverständlich ist auch für die zweiten Endgeräte eine Ausgabe von Informationen vorgesehen, die jedoch vom Arbiter durchgeführt wird. Dazu ist der Arbiter mit einem Ausgabeschiebespeicher versehen, in den die bei Ausführung eines Programmoduls gebildeten Ausgabeinformationen eingeschrieben werden. Weitere Details zum Arbiter sind in Zusammmenhang mit einem Ausführungsbeispiel näher erläutert.

Bevor das Anreizsicherungsprogrammodul gänzlich abgearbeitet ist, löst es einen, ein Arbitrierungsprogrammodul bezeichnenden internen Anreiz aus, sofern in der Prozeßliste das Arbitrierungsprogrammodul nicht vermerkt ist. Mit seinem Prioritätswert liegt das Arbitrierungsprogrammodul am unteren Ende der zweiten Kategorie, es weist also eine relativ niedrige Priorität auf.

Das Arbitrierungsprogrammodul, das nur dann vom Systemprozessor abgearbeitet werden kann, wenn kein höherpriores Programmodul in der Prozeßliste vermerkt ist, hat die Aufgabe, die im Schiebespeicher des Arbiters zwischengespeicherten Meldungen und die in den Anreizspeichern hinterlegten Anreize auszulesen. Dabei werden die während eines jeweiligen Abfragezyklus eingespeicherten Meldungen nacheinander ausgelesen und anschließend aus jedem der Anreizspeicher, sofern ein Anreiz überhaupt vorhanden ist, nur ein Anreiz entnommen. Durch dieses Vorgehen ist sichergestellt, daß alle Endgeräte, egal ob zur ersten oder zweiten Art gehörig, gleichbehandelt werden. Selbstverständlich kann auch die Reihenfolge vertauscht sein, so daß zuerst die Anreizspeicher ausgelesen werden und dann erst die Meldungen aus dem Schiebespeicher.

Vom Arbitrierungsprogrammodul wird zu jedem ausgelesenem Anreiz bzw. Meldung ein interner Anreiz ausgelöst, durch den die von den ausgelesenen Anreizen und Meldungen bezeichneten Programmodule in der Prozeßliste als ablaufbereit vermerkt werden. Diese Programmodule gehören der zweiten Kategorie an und liegen mit ihren Prioritätswerten zwischen dem Prioritätswert des Anreizsicherungsprogrammoduls und dem des Arbitrierungsprogrammoduls.

Ein wesentlicher Aspekt bei einer erfindungsgemäß realisierten Kommunikationsanlage ist in der gleichmäßigen Verteilung der für eine Signalisierungsbehandlung zu Verfügung stehenden Verarbeitungsleistung auf die angeschlossenen Endgeräte zu sehen. Aufgrund der vorstehend erläuterten Prioritätsstrukturen kann stets nur ein Programmodul der zweiten Kategorie in der Prozeßliste als ablaufbereit vermerkt sein. Das Arbitrierungsprogrammodul kann nämlich aufgrund seiner relativ geringen Priorität nur dann ablaufen, wenn kein Programmodul der zweiten Kategorie in der Prozeßliste als ablaufbereit vermerkt ist. Sobald das Arbitrierungsprogrammodul einen internen Anreiz für ein Programmodul der zweiten Kategorie auslöst, wird der Ablauf des Arbitrierungsprogrammodules unterbrochen, da dann ein gegenüber dem Arbitrierungsprogrammodul höherpriorisiertes Programmodul in der Prozeßliste als ablaufbereit vermerkt wird.

Anhand der Zeichnung soll im folgenden ein Ausführungsbeispiel der Erfindung näher erläutert werden.

Dabei zeigen
- Fig. 1: eine schematische Blockdarstellung einer Kommunikationsanlage in Zusammenhang mit Endgeräten,
- Fig. 2: eine schematische Blockdarstellung für einen Endgerätesignalisierungsarbiter,
- Fig. 3: ein Ablaufdiagramm zur Veranschaulichung der wesentlichen programmtechnischen Schritte im Betriebssystem
- Fig. 4: ein Ablaufdiagramm zur Veranschaulichung der wesentlichen programmtechnischen Schritte im Anreizsicherungsprogrammodul und
- Fig. 5: ein Ablaufdiagramm zur Veranschaulichung der wesentlichen programmtechnischen Schritte im Arbitrierungsprogrammodul.

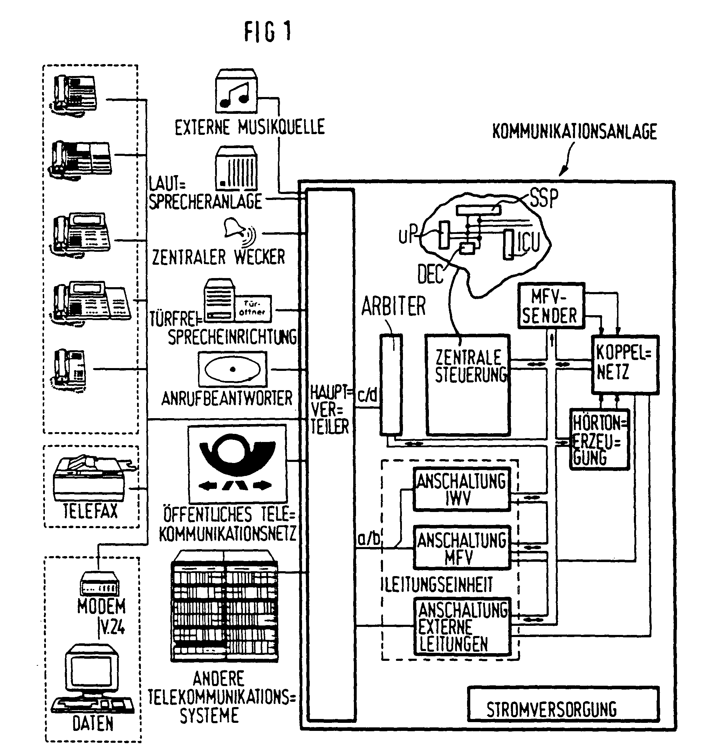

In Fig. 1 ist eine Kommunikationsanlage mittleren Komplexitätsgrades schematisch dargestellt. An die Kommunikationsanlage sind eine Vielzahl von Endgeräten anschließbar, wobei nur einige zur Symbolisierung unterschiedlicher Ausführungsformen angedeutet sind.

Die Kommunikationsanlage selbst besteht im Prinzip aus einzelnen, untereinander verbundenen modularen Einheiten. Als wesentlich zu erwähnen sind ein Hauptverteiler als Schnittstelleneinrichtung zu den angeschlossenen Endgeräten, und eine Leitungseinheit mit unterschiedlichen Anschaltbaugruppen, die die unterschiedlichen Signalisierungsträgerformate über eine a/b-Aderverbindung von den Endgeräten auf ein innerhalb der Kommunikationsanlage einheitlich verwendetes Format umwandeln.

Eine weitere wesentliche Einheit bildet das Koppelnetz, das die Verbindungswege zwischen den Endgeräten untereinander und/oder den Endgeräten und angeschlossenen Telekommunikationsnetzen durchschaltet.

Des weiteren ist ein Hörtonerzeugungsmodul und jeweils ein MFV- und iWV-Sendermodul vorhanden (MFV = Mehrfrequenzwahlverfahren, IWV = Impulswahlverfahren).

Sämtliche modulare Einheiten sind mit einer zentralen Steuerung verbunden, die aus einem digitalen Verarbeitungssystem besteht, das die Funktionen der einzelnen Einheiten überwacht und diese zur Ausführung ihrer spezifischen Funktionen anregt und von diesen Daten entgegennimmt.

Die zentrale Steuerung besteht aus einem Systemprozessor UP, z. B. vom Typ SAB 8088, einem Systemspeicher SSP, in dem Daten und Programmodule hinterlegt sind. Weiterhin enthält die zentrale Steuerung eine Dekodereinrichtung DEC zum Auswählen von einzelnen Adressen und eine Interruptsteuereinheit ICU zur Bearbeitung von Interrupt-Anforderungen. Diese Einheiten sind untereinander über je einen Daten- und Adressbus miteinander verbunden, über die auch die zentrale Steuerung mit den anderen zuvor beschriebenen Modulen verbunden ist.

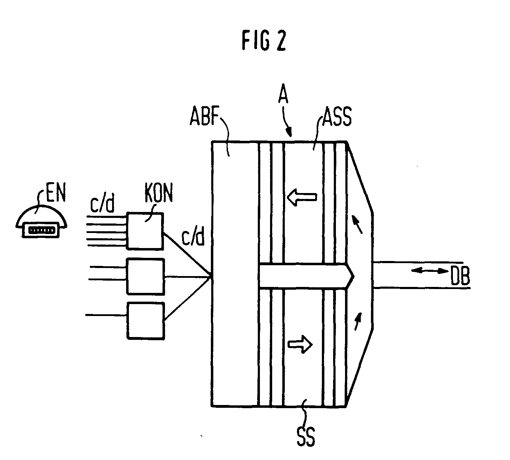

In Figur 2 ist ein Endgerätesignalisierungsarbiter A schematisch dargestellt. Diese im folgenden Arbiter genannte Einrichtung ist als Schaltungsanordnung in Form eines Bausteines ausgebildet und weist im wesentlichen drei funktionale Einheiten auf.

Eine Abfrageeinrichtung ABF, die über die c/d-Aderverbindung die zweiten Endgeräte nacheinander zyklisch nach Meldungen abfrägt. Zwischen zwei Abfragen ein- und desselben Endgerätes werden demnach sämtliche andere Endgeräte der zweiten Art abgefragt. Der Arbiter A weist weiterhin einen Schiebespeicher SS auf, der als 'FIFO-Speicher' ausgebildet ist und z. B. eine Kapazität von 20 '8-bit-Worten' aufweist. In diesen Schiebespeicher SS werden über die c/d-Aderverbindung Meldungen eingelesen und von der zentralen Steuerung werden diese Meldungen über den Datenbus DB ausgelesen. Der Arbiter A weist weiterhin einen Ausgabeschiebespeicher ASS auf, der ebenfalls in Form eines 'FIFO-Speichers' ausgebildet ist und z. B. zur Aufnahme von zwei Meldungen dient. Die Meldungen werden von der zentralen Steuerung über den Datenbus in den Ausgabeschiebespeicher ASS eingeschrieben und über die c/d-Aderverbindung den Endgeräten EN übermittelt, an die diese Meldungen gerichtet sind.

Der Arbiter A ist eine weitgehend selbständige Funktionseinheit, die nicht von der zentralen Steuerung überwacht oder gesteuert werden muß. Aufgrund der begrenzten Speicherkapazität im Schiebespeicher SS können nicht beliebig viele Meldungen zwischengespeichert werden. Die Abfrageeinrichtung ABF schaltet nur dann zur Abfrage des nächsten Endgerätes weiter, wenn eine erkannte Meldung komplett im Schiebespeicher SS eingespeichert werden konnte. Falls nicht genügend freie Speicherplätze zur Speicherung einer abgerufenen Meldung im Schiebespeicher vorhanden sind, wird so lange gewartet werden, bis die zentrale Steuerung über den Datenbus DB aus dem Schiebespeicher SS Meldungen entnimmt.

Im Ausgabeschiebespeicher ASS kann die zentrale Steuerung so lange Meldungen hinterlegen, bis der Ausgabeschiebespeicher ASS gefüllt ist. In Wartezeiten, in denen die Abfrageeinrichtung ABF auf einen freiwerdenden Schiebespeicher SS warten muß, um eine Meldung von einem Endgerät in den Schiebespeicher SS zu übertragen, werden von dem Arbiter A die im Ausgabeschiebespeicher ASS eingespeicherten Meldungen an die zweiten Endgeräte EN übermittelt, für die die betreffenden Meldungen vorgesehen sind.

Dem Arbiter A können zu den Endgeräte EN hin mehrere Konzentratoren KON vorgeschaltet sein, die z.B. jeweils acht Endgeräte EN bedienen.

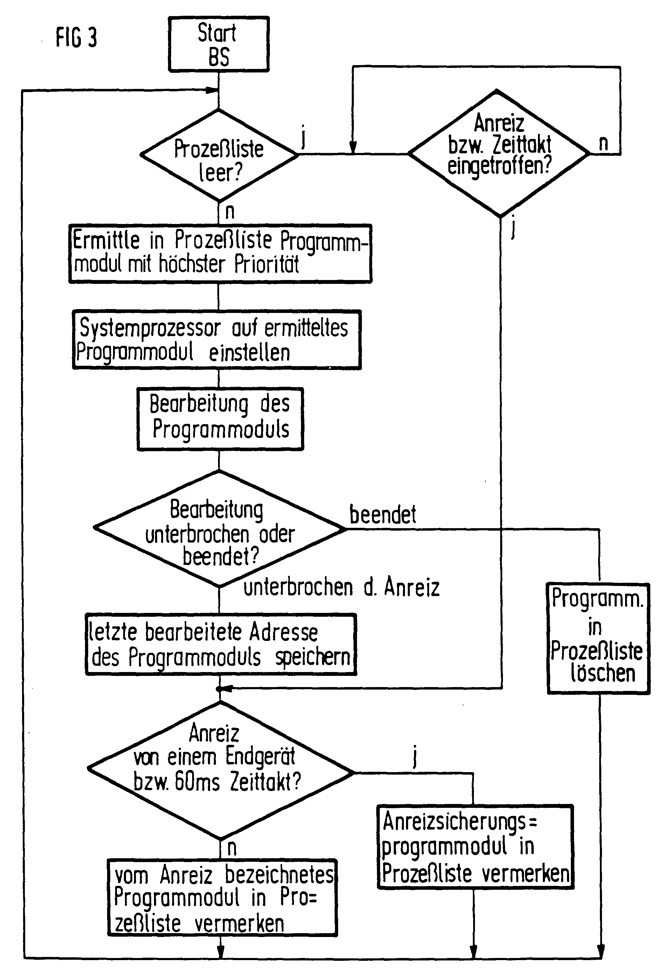

In Figur 3 ist ein Ablaufdiagramm dargestellt, anhand dessen sich die wesentlichen programmtechnischen Schritte, die vom Betriebssystem ausgeführt werden, nachvollziehen lassen.

Sofern die vom Betriebssystem BS verwaltete Prozeßliste wenigstens ein (als ausführungsbereit) vermerktes Programmodul aufweist, wird von den vermerkten Programmodulen dasjenige mit der höchsten Priorität ermittelt. Daraufhin wird der Systemprozessor UP auf die Adresse im Systemspeicher SSP eingestellt, an der das betreffende Programmodul gespeichert ist. Danach erfolgt die Ausführung des ermittelten Programmodules. Diese Ausführung kann beendet oder unterbrochen werden. Ist die Ausführung beendet, wird in der Prozeßliste der dieses Programmodul identifizierende Vermerk gelöscht und die vorstehend beschriebene Zuteilungsequenz von neuem durchlaufen. Ist die Ausführung unterbrochen worden, so wird die letzte bearbeitete Adresse des Programmoduls gespeichert, um für eine Fortsetzung der Abarbeitung an der unterbrochenen Stelle zur Verfügung zu stehen.

Eine Unterbrechung kann durch einen direkten Anreiz von einem Endgerät, einem Echtzeitbezogenen Zeittakt, z. B. einem 66 ms Zeittakt oder durch irgendeine andere eintreffende Information in Form eines Anreizes ausgelöst worden sein.

Stammt der eingetroffene Anreiz von einem Endgerät oder vom 66 ms Zeittakt, so wird das Anreizsicherungsprogrammodul AN in der Prozeßliste als ausführungsbereit vermerkt. Bei anderen Anreizen, die nicht von einem Endgerät stammen, also auch internen Anreizen, wird das von dem Anreiz bezeichnete Programmodul unmittelbar in der Prozeßliste vermerkt. Danach wird die Zuteilungssequenz von neuem durchlaufen.

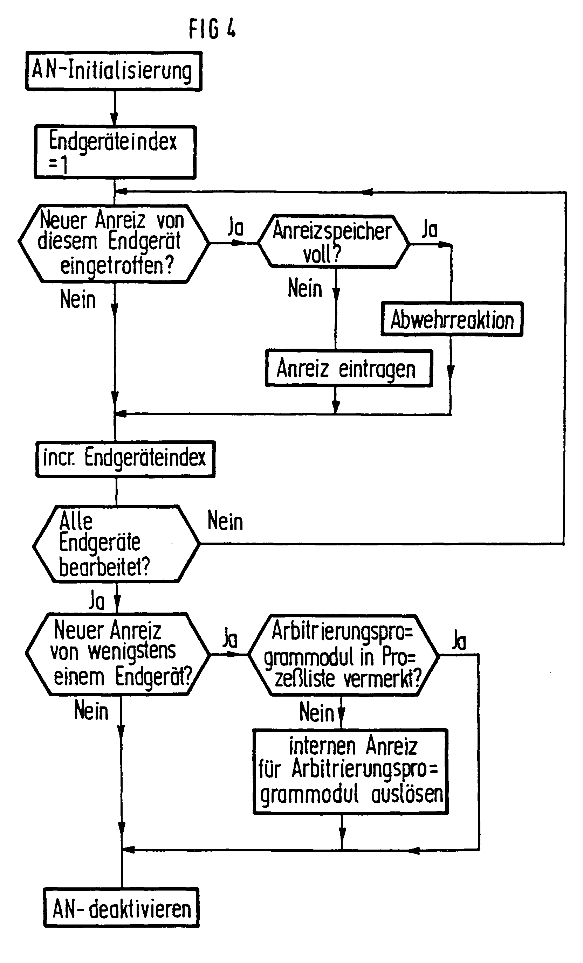

In Figur 4 ist ein Ablaufdiagramm dargestellt, anhand dessen sich die wesentlichen programmtechnischen Schritte im Anreizsicherungsprogrammodul nachvollziehen lassen.

Zunächst wird ein die ersten Endgeräte betreffender Endgeräteindex auf 1 voreingestellt. Anschließend wird ein dem Endgerät, das durch diesen Endgeräteindex bezeichnet ist, zugeordneter Meldespeicher abgefragt, indem Anreize von diesem Endgerät aufgenommen werden können. Im Fall eines eingetroffenen Anreizes wird ein dem betreffenden Endgerät individuell zugehöriger Anreizspeicher hinsichtlich seines Füllstandes überprüft. Ist der Anreizspeicher voll, so wird eine Abwehrreaktion eingeleitet, auf die hier nicht weiter eingegangen werden soll. Ist der Anreizspeicher noch aufnahmebereit, wird der im Meldespeicher befindliche Anreiz eingetragen.

Falls dem durch den Endgeräteindex bezeichneten Endgerät ein Informationsausgabespeicher zugeordnet ist, wird aus diesem eine Teilinformation entnommen und an das bezeichnete Endgerät übermittelt (nicht veranschaulicht).

Anschließend wird der Endgeräteindex inkrementiert, d. h. um 1 erhöht und es wird überprüft, ob bereits alle ersten Endgerät behandelt wurden. Ist dies nicht der Fall, so wird in analoger Weise der dem momentan gültigen Endgeräteindex zugehörige Meldespeicher abgefragt und ein Anreiz im zugehörigen Anreizspeicher eingetragen. Falls vorhanden, wird eine Teilinformation aus dem zugeordneten Informationsausgabespeicher entnommen und an das Endgerät übermittelt.

Ist sichergestellt, daß alle ersten Endgeräte behandelt wurden, also der Endgeräteindex seinen Maximalwert angenommen hat, so wird für den Fall, daß wenigstens in einem der Anreizspeicher ein Anreiz hinterlegt worden ist, geprüft, ob das Arbitrierungsprogrammodul noch in der Prozeßliste als ablaufbereit vermerkt ist. Ist dies nicht der Fall, so wird ein interner Anreiz, der das Arbitrierungsprogrammodul bezeichnet, ausgelöstbevor sich das Anreizsicherungsprogrammodul selbst deaktiviert.

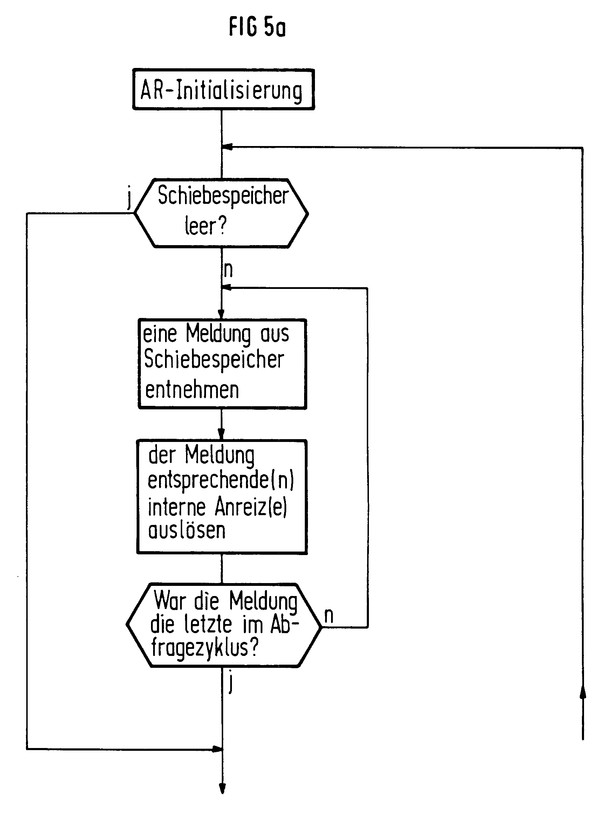

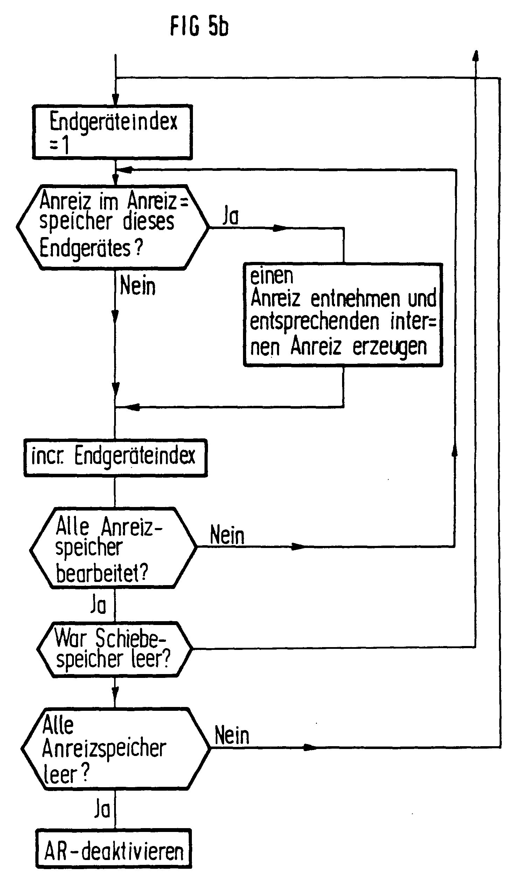

In Figur 5 ist ein Ablaufdiagramm dargestellt, mit dem sich die wesentlichen programmtechnischen Schritte im Arbitrierungsprogrammodul nachvollziehen lassen.

Das Ablaufdiagramm beginnt mit der Initialisierung des Arbitrierungsprogrammodules, die nur dann durchlaufen wird, wenn das Arbitrierungsprogrammodul beendet, also nicht unterbrochen wurde. Zunächst wird der Schiebespeicher SS des Arbiters A hinsichtlich auslesbarer Meldungen überprüft. Für den Fall, daß Meldungen enthalten sind, wird eine einzige Meldung aus dem Schiebespeicher entnommen. Entsprechend dieser Meldung wird ein interner Anreiz ausgelöst, mit dem ein der Meldung zugeordnetes Programmodul bezeichnet wird. Gegebenenfalls können auch mehrere interne Anreize aufgrund der entnommenen Meldung ausgelöst werden.

Im Schiebespeicher SS wird am Ende jedes Abfragezyklusses ein Trennwort eingefügt, so daß erkennbar ist, ab welcher Meldung ein neuer Zyklus beginnt. Für den Fall, daß mit der entnommenen Meldung noch nicht das Zyklusende erreicht ist, wird wieder eine Meldung entnommen und in analoger Weise ein interner Anreiz ausgelöst. War die entnommene Meldung die letzte des Zyklus, dann folgt die Bearbeitung der von den ersten Endgeräten eingetroffenen Anreize.

Ausgehend von einer Voreinstellung eines Endgeräteindex auf 1, wird in dem, durch diesen Endgeräteindex bezeichneten Endgerät individuell zugeordneten Anreizspeicher geprüft, ob wenigstens ein Anreiz vorhanden ist. Ist dies der Fall, wird genau ein Anreiz entnommen und ein interner Anreiz erzeugt, der dem entnommenen entspricht und dasselbe Programmodul bezeichnet. Anschließend wird der Endgeräteindex inkrementiert und geprüft, ob alle Anreizspeicher abgefragt wurden. Ist dies nicht der Fall, so wird in analoger Weise wie beim Endgeräteindex = 1 verfahren.

Falls alle Anreizspeicher abgefragt wurden, wird überprüft, ob im vorhergehenden der Schiebespeicher leer war. Für den Fall, daß dies nicht der Fall war, wird mit der Abfrage von Meldungen aus dem Schiebespeicher begonnen, wobei dann Meldungen des nächsten Zyklus abgefragt werden. Für den Fall, daß der Schiebespeicher jedoch leer war, wird überprüft, ob alle Anreizspeicher leer sind. Für den Fall, daß sich noch Anreize in den Anreizspeichern befinden, wird mit dem Endgeräteindex = 1, wie bereits beschrieben, fortgesetzt. Nur für den Fall, daß in vorausgehenden der Schiebespeicher leer war und alle Anreizspeicher sich als leer erwiesen haben, beendet sich das Arbitrierungsprogrammodul.

## Patentansprüche

1. Programmgesteuerte Kommunikationsanlage zur wahlweisen Verbindung von Endgeräten, von denen erste Endgeräte Signalisierungsinformationen in Form von Anreizen vorsehen, die zu vom Endgerät bestimmbaren Zeitpunkten an die Kommunikationsanlage übertragbar sind und von denen zweite Endgeräte Signalisierungsinformationen in Form von Meldungen vorsehen, deren Übermittlung auf Abruf durch die Kommunikationsanlage an diese erfolgt;
- mit einem Endgeätesignalisierungsarbiter (A) für die zweiten Endgeräte,
-- der eine Abfrageeinrichtung (ABF) zum zyklusweisen Abruf von Meldungen aufweist derart, daß pro Zyklus nacheinander alle zweiten Endgeräte einmal abgefragt werden, und
-- der einen Schiebespeicher (SS) zur Zwischenspeicherung von Meldungen aufweist, wobei pro Endgerät nicht mehr als eine Meldung zur Einspeicherung vorgesehen ist
- sowie mit einer zur zentralen Steuerung der Kommunikationsanlage dienenden programmierbaren digitalen Verarbeitungseinheit,
-- für die in Zuordnung zu übermittelten oder intern ausgelösten Anreizen und/oder Meldungen Verarbeitungsvorschriften vorgesehen sind, die in Form von durch die Anreize und/oder Meldungen bezeichneten Programmodulen in einem Systemspeicher (SSP) hinterlegt sind,und
-- die wenigstens einen Systemprozessor (UP) aufweist,dem unter Steuerung eines Betriebssystems (BS) die Programmodule prioritätsgesteuert zur Ausführung zuweisbar sind, wobei vom Betriebssystem
--- bei eintreffenden Anreizen ein Anreizsicherungsprogrammodul hoher Priorität in Ausführungsbereitschaft versetzbar ist,
---- das zum Vermerk der eingetroffenen Anreize in, der Quelle eines jeweiligen Anreizes individuell zugeordneten Anreizspeichern dient, und
---- von dem ein interner Anreiz auslösbar ist, der das Betriebssystem dazu veranlaßt,
--- ein Arbitrierungsprogrammodul niedriger Priorität in Ausführungsbereitschaft zu versetzen,
---- das jeweils zum Auslesen der pro Zyklus im Schiebespeicher zwischengespeicherten Meldungen und zur Entnahme je eines Anreizes aus den Anreizspeichern dient, wodurch das Betriebssystem veranlaßt ist, das jeweils von einer Meldung und/oder Anreiz bezeichnete Programmodul, dessen Priorität zwischen der des Anreizsicherungsprogrammoduls und der des Arbitrierungsprogrammodules angeordnet ist, in Ausführungsbereitschaft zu versetzen.

2. Programmgesteuerte Kommunikationsanlage nach Anspruch 1, **dadurch gekennzeichnet,**
**daß** der Endgerätesignalisierungsarbiter (A) einen Ausgabeschiebespeicher (ASS) aufweist, in den Informationen einspeicherbar sind, die zur Ausgabe an zweite Endgeräte vorgesehen sind.

3. Programmgesteuerte Kommunikationsanlage nach Anspruch 2, **dadurch gekennzeichnet,**
**daß** vom Endgerätesignalisierungsarbiter (A) die Informationen in Wartephasen der Abfrageeinrichtung (ABF), die aufgrund einer beschränkten Aufnahmekapazität des Schiebespeichers (SS) entstehen, an die zweiten Endgeräte übertragbar sind.

## Claims

1. Program-controlled communications installation for the optional connection of terminals, of which first terminals provide signalling information in the form of events which can be transmitted to the communications installation at instants which can be determined by the terminal, and of which second terminals provide signalling information in the form of messages which are communicated to the communications installation upon call-up by the latter;
- having a terminal signalling arbiter (A) for the second terminals,
-- which has an interrogation device (ABF) for the cycle-by-cycle call-up of messages, in such a way that all the second terminals are successively interrogated once per cycle, and
-- which has a shift memory (SS) for buffer-storing messages, not more than one message being provided for storage per terminal,
- and also having a programmable digital processing unit which is used for the central control of the communications installation,
-- for which processing unit processing prescriptions are provided, assigned to events and/or messages which have been communicated or have been triggered internally, and are stored in a system memory (SSP) in the form of program modules designated by the events and/or messages, and
-- which processing unit has at least one system processor (UP), to which the program modules can be allocated for execution in a priority-controlled manner under the control of an operating system (BS), in which case the operating system
--- can put a high-priority event protection program module into execution readiness in the case of arriving events,
---- which event protection program module is used to record the events that have arrived in event memories which are individually assigned to the source of a respective event, and
---- by which event protection program module an internal event can be triggered which causes the operating system
--- to put a low-priority arbitration program module into execution readiness,
---- which arbitration program module is used in each case to read out the messages buffer-stored in the shift memory per cycle and to remove a respective event from the event memories, thereby causing the operating system to put into execution readiness the program module which is respectively designated by a message and/or event and the priority of which is arranged between that of the event protection program module and that of the arbitration program module.

2. Program-controlled communications installation according to Claim 1, **characterized**
**in that** the terminal signalling arbiter (A) has an output shift memory (ASS), in which information can be stored which is provided for outputting to second terminals.

3. Program-controlled communications installation according to Claim 2, **characterized**
**in that** the terminal signalling arbiter (A) can transmit the information to the second terminals in waiting phases of the interrogation device (ABF), which arise on account of a limited holding capacity of the shift memory (SS).

## Revendications

1. Installation de communication à commande programmée destinée à relier à volonté des terminaux parmi lesquels des premiers terminaux prévoient des informations de signalisation sous la forme de sollicitations, qui peuvent être transmises par le terminal à des instants pouvant être déterminés à l'avance et parmi lesquels des deuxièmes terminaux prévoient des informations de signalisation sous la forme de messages dont la transmission à l'installation de communication se fait sur appel par cette dernière;
- avec un arbitre de signalisation (A) pour les deuxièmes terminaux,
-- qui comporte un dispositif d'interrogation (ABF) destiné à l'appel cyclique de messages de telle sorte que, pendant chaque cycle, tous les deuxièmes terminaux sont interrogés une fois l'un après l'autre et
-- qui comporte une mémoire à décalage (SS) destinée à la mémorisation en tampon de messages, pas plus d'un message par terminal étant prévu pour être mémorisé,
- ainsi qu'avec une unité numérique de traitement à commande programmée servant à la commande centralisée de l'installation de communication,
-- pour laquelle sont prévues, en concordance avec des sollicitations transmises ou déclenchées intérieurement et/ou des messages, des instructions de traitement qui sont enregistrées dans une mémoire du système (SSP) sous la forme de modules de programme désignés par les sollicitations et/ou les messages, et
-- qui comporte au moins un processeur de système (UP) auquel on peut, sous le contrôle d'un système d'exploitation (BS), allouer, sous une commande par priorité, les modules de programme en vue de leur exécution, le système d'exploitation
--- pouvant, lorsqu'une sollicitation arrive, mettre en état d'instance d'exécution un module de programme à priorité élevée pour la sauvegarde des sollicitations,
---- qui sert à marquer les sollicitations, qui arrivent, dans une mémoire à sollicitations affectée individuellement à la source de la sollicitation respective et
---- qui peut déclencher une sollicitation interne laquelle incite le système d'exploitation
--- à mettre en état d'attente d'exécution un module de programme d'arbitrage à faible priorité,
---- qui sert, dans chaque cas, à extraire les messages mémorisés en tampon, cycle par cycle, dans la mémoire à décalage et à extraire une sollicitation de chacune des mémoires à sollicitations, ce qui incite le système d'exploitation à mettre en état d'instance d'exécution le module de programme, désigné dans chaque cas par un message et/ou par une sollicitation, dont la priorité se trouve entre celle du module de programme destiné à la sauvegarde des sollicitations et celle du module de programme d'arbitrage.

2. Installation de communication à commande programmée selon la revendication 1
**caractérisée par le fait**
**que** l'arbitre de signalisation des terminaux (A) comporte une mémoire à décalage de sortie (ASS) dans laquelle on peut mémoriser des informations destinées à être envoyées à des deuxièmes terminaux.

3. Installation de communication à commande programmée selon la revendication 2
**caractérisée par le fait**
**que** l'arbitre de signalisation des terminaux (A) peut transmettre les informations aux deuxièmes terminaux pendant des phases d'attente du dispositif d'interrogation (ABF) qui se produisent en raison d'une capacité limitée de mémorisation de la mémoire à décalage (SS).
